# EUROPEAN PATENT APPLICATION

(11) **EP 1 743 553 A1**
(43) Date of publication of application: **17.01.2007**
(21) Application number: 06116873.8
(22) Date of filing: 10.07.2006
(51) Int. Cl.: A47J 31/36

(54) **Beverage Extractor**

(30) Priority: 12.07.2005 JP 2005202831
(71) Applicant: Sanden Corporation, Isesaki-shi, Gunma 372-8502 (JP)
(72) Inventor: Sato, Takeshi, Isesaki-shi, Gunma 372-8502 (JP)
(74) Representative: Haley, Stephen

(57) **Abstract**

The present invention is to provide a beverage extractor (1) which contributes to reducing the installation space and enhancing the durability and can sufficiently extract the components of raw material. As hot water inlets (22,24) for feeding hot water into a cylinder (20) and extract outlets (23,25) for letting out extract liquid prepared within the cylinder (20) are disposed in the circumferential face of the cylinder (20) fixed to a frame (10), a pipe can be connected to each of the hot water inlets (22,24) and the extract outlets (23,25) without having to use flexible piping or arrange a complex mechanism for connecting the pipes, making it possible to reduce the installation space and enhance the durability. Moreover, the components of raw material can be sufficiently extracted because hot water can be circulated within the cylinder (20) in the lengthwise direction of the raw material compressed by the first piston (32) and the second piston (33) and the resistance of the raw material to the circulation of hot water is thereby increased.

## Description

The present invention relates to a beverage extractor for extract beverage from raw material, such as coffee beans ground into a powder form.

One of known such beverage extractors has a cylinder for accommodating a rawmaterial and a piston for compressing the rawmaterial accommodated in the cylinder, wherein the raw material contained in the cylinder is compressed with the piston by moving either the cylinder or the piston and a beverage is extracted by supplying hot water into the cylinder.

In the conventional beverage extractor, a hot water feed pipe for feeding hot water into the cylinder or an extract pipe for circulating the extract liquid is connected to the moving cylinder or piston. The structure for connecting the hot water feed pipe or the extract pipe to the moving cylinder or piston is complex, such as connecting it with a flexible pipe or connecting the pipe only when the cylinder or piston comes into its position of extracting the beverage. As a consequence, a large installation space is required for the movement of the piping or the connecting mechanism for the piping, and the use of the flexible piping material and the complex mechanismmay deteriorate the durability of the extractor.

Moreover, as the raw material is compressed into a columnar shape short in the direction of the center axis and hot water is circulated in the direction of the center axis of the rawmaterial in the conventional beverage extractor, the raw material cannot be sufficiently kept in contact with the hot water, which might prevent the components of the raw material from being sufficiently extracted. Furthermore, when the raw material is compressed, if it is not compressed evenly, hot water circulation will concentrate in a less compressed part, which may also prevent the components of the raw material from being sufficiently extracted.

An obj ect of the present invention is to provide a beverage extractor which is reduced in installation space, increased in durability and capable of sufficiently extracting the components of raw material.

In order to achieve the object stated above, a beverage extractor according to the invention is provided with a frame; a cylinder fixed to the frame; a compressing member disposed to be movable within the cylinder, for compressing a raw material contained in the cylinder; a hot water inlet disposed in the circumferential face of the cylinder, for feeding hot water into the cylinder; and an extract outlet disposed in the circumferential face of the cylinder, for letting out extract liquid from the cylinder.

As in this arrangement pipes are connected to the hot water inlet or the extract outlet provided in a fixed cylinder, there is no need to use flexible pipes or provide a complex mechanism for connection of the piping. Moreover, as the hot water inlet and the extract outlet are disposed in the circumferential face of the cylinder, hot water can be circulated in the lengthwise direction of the compressed raw material. Therefore, since pipes can be connected to the hot water inlet or the extract outlet without having to use flexible pipes or to provide a complex mechanism for connection of the piping, not only the installation space can be reduced but also the durability of the system can be enhanced. Also, since it is possible to circulate hot water in the lengthwise direction of the compressed raw material, the components of the raw material can be sufficiently extracted.

The above-described and other objects, features and benefits of the invention will become more apparent from the following detailed description when taken in conjunction with the accompanying drawings.
FIG. 1 is a schematic configurational diagram of a beverage extracting system which is an embodiment of the present invention;
FIG. 2 is a plan of a beverage extractor;
FIG. 3 shows a planar section of the beverage extractor;
FIG. 4 shows a profile section of the beverage extractor;
FIG. 5 is a frontal sectional view of the beverage extractor showing an action to extract beverage;
FIG. 6 is a frontal sectional view of the beverage extractor showing another action to extract beverage;
FIG. 7 is a frontal sectional view of the beverage extractor showing another action to extract beverage;
FIG. 8 is a frontal sectional view of the beverage extractor showing another action to extract beverage; and
FIG. 9 is a frontal sectional view of the beverage extractor showing another action to extract beverage.

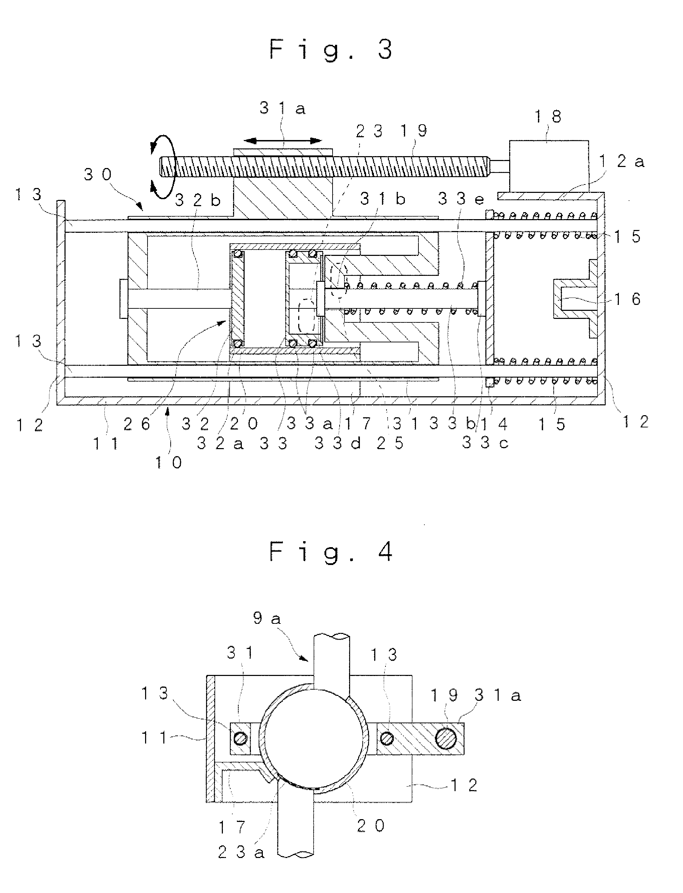

In the following description, the right part of FIG. 2 will be referred to as right; the left part of FIG. 2 as left; the lower part of FIG. 2 as front (before or the like); the upper part of FIG. 2 as rear (behind or the like); the nearer part to the viewer of FIG. 2 as upper; and the farther part from the viewer of FIG. 2 as lower.

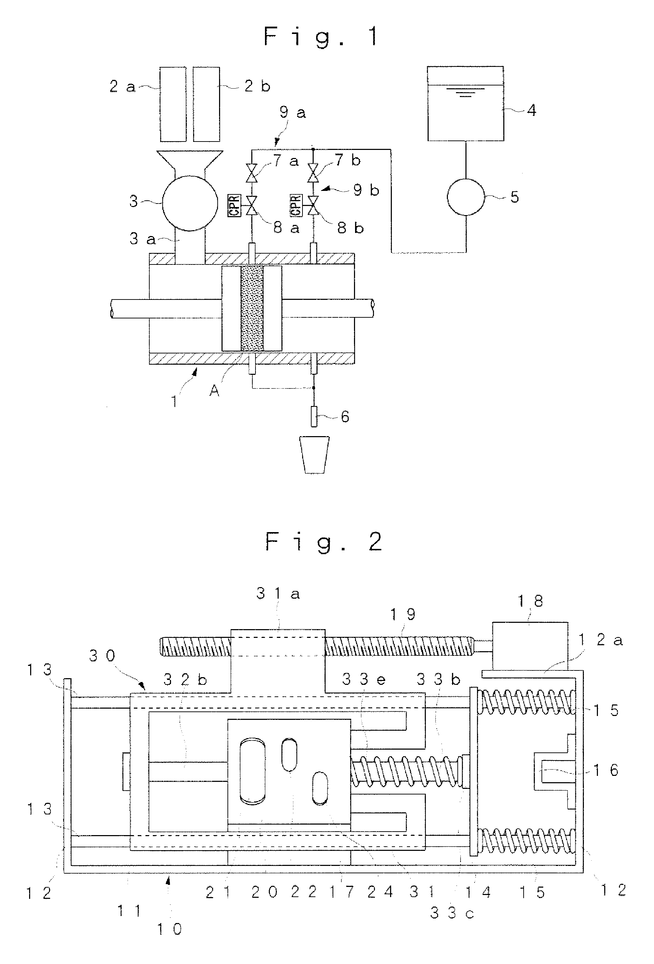

A beverage extractor 1 according to the invention can extract regular coffee or espresso coffee when connected to a beverage extracting system, such as the one shown in FIG. 1. This beverage extracting system is equipped with canisters 2a and 2b for storing coffee beans for respectively regular coffee and espresso coffee, a mill 3 for grinding coffee beans delivered from the canisters 2a and 2b into powder, a hot water tank 4 for storing hot water, and a pump 5 pressure-feeding hot water to the beverage extractor 1. In this beverage extracting system, coffee powder as raw material A is inputted to the beverage extractor 1, to which hot water is fed, and the extract is poured from a nozzle 6 into a cup. In the beverage extracting system, which has opening/closing valves 7a and 7b and pressure regulating valves 8a and 8b, a hot water feed circuit 9a for regular coffee and a hot water feed circuit 9b for espresso coffee can be switched over back and forth. The feeding pressure of hot water to be supplied to the beverage extractor 1 is set to 0.1 to 0.3 MPa for the hot water feed circuit 9a for regular coffee and 0.9 MPa for the hot water feed circuit 9b for espresso coffee.

This beverage extractor 1 is provided with a frame 10 so arranged as to extend in the right and left directions, a cylinder 20 fixed to the frame 10, and a piston unit 30 linked to the frame 10 to be movable in the axial direction of the cylinder 20.

Of the frame 10, a front plate 11 positioned on the front side and a pair of side plates 12 positioned on the right and left flank sides are formed integrally, the cylinder 20 and the piston unit 30 are supported behind the front plate 11 between the side plates 12. Unit guides 13 formed in a rod shape extending in the right and left directions are arranged on both front and rear sides between the side plates 12, and both front and rear sides of the piston unit 30 are supported by the front and rear pair of unit guides 13 to be movable in the right and left directions. A contact plate 14, which is one of the constituent elements of a raw material compressing mechanism with which an end of the piston shaft of a second piston to be described afterwards is to come into contact, is linked to each of the unit guides 13 to be movable in the right and left directions. Raw material compressing springs 15, which are one item of constituent elements of the raw material compressing mechanism, each formed in a coil shape, are provided, each winding around one or the other of the unit guides 13, positioned between the contact plate 14 and the right side plate 12 to urge the contact plate 14 leftward. A motion restricting unit 16, which is one of the constituent elements of raw material compressing mechanism, has a face of contact with the contact plate 14 and is intended to restrict the rightward motion of the contact plate 14 by coming into contact with the contact plate 14 is disposed on the contact plate 14 side of the right side plate 12. A cylinder fixing member 17 extending backward underneath the unit guides 13 is disposed on the rear face of the substantially central part of the front plate 11 in the right and left directions, and the cylinder 20 is fixed to the cylinder fixing member 17. An extending portion 12a so formed as to extend leftward is provided toward the rear end of the right side plate 12, and a reversible motor 18, which is to supply power to the piston unit 30, is thereby supported. A drive shaft 19, all around whose circumferential face a thread is formed, is so linked to the rotation shaft of the motor 18 as to extend in the right and left directions, and turns together with the rotation shaft of the motor 18. The drive shaft 19 is screwed onto the piston unit 30, and the piston unit 30 is moved in the right and left directions by turning the drive shaft 19.

The cylinder 20, consisting of a cylindrical member of which both ends in the direction of the center axis are opened, and is fixed to the frame 10 via the cylinder fixing member 17 with the center axis oriented in the right and left directions. A raw material input port 21 is provided on the upper left side of the circumferential face of the cylinder 20, and a chute 3a for guiding coffee powder obtained by grinding the beans with a mill 3 into the cylinder 20 is connected to it. In the upper central part the circumferential face of the cylinder 20, a hot water inlet 22 for regular coffee is provided, to which the hot water feed circuit 9a for regular coffee is connected. In the lower part of the circumferential face positioned underneath the hot water inlet 22 for regular coffee, an extract outlet 23 for regular coffee is disposed, to which a nozzle 6 is connected via an extract liquid circulating pipe. On the upper right side of the circumferential face the cylinder 20, a hot water inlet 24 for espresso coffee is provided, to which the hot water feed circuit 9b for espresso coffee is connected. In the lower part of the circumferential face positioned underneath the hot water inlet 24 for espresso coffee, an extract outlet 25 for espresso coffee, which is connected to the nozzle 6 via the extract liquid circulating pipe. The extract outlet 23 for regular coffee and the extract outlet 25 for espresso coffee are so disposed as to have opening areas matching the extracted quantities of the respective beverages. The extract outlet 23 for regular coffee and the extract outlet 25 for espresso coffee are provided with filters 23a and 25a, each consisting of a planar metallic member having a plurality of extracting holes to filter the extract liquid. Each of the filters 23a and 25a, so formed as to have substantially the same curvature as the inner face of the cylinder 20, is fitted to the inner face of the cylinder 20. Each of the filters 23a and 25a has an opening ratio, and an extracting hole size and shape matching the type of beverage extract at the extract outlet 23 for regular coffee or the extract outlet 25 for espresso coffee, whichever may apply, and the hot water feed pressure. In this embodiment, as a beverage which is lower in hot water feed pressure and less in the content of raw material grounds A' at the extract outlet 23 for regular coffee, a filter higher in opening ratio and smaller in the diameter of each extracting hole is used. On the other hand, as a beverage under a higher hot water feed pressure is extracted at the extract outlet 25 for espresso coffee, a filter of a lower opening ratio is used. An opening on the left side of the cylinder 20 is used as a raw material discharge port 26 for discharging the raw material grounds A' remaining after the extraction.

The piston unit 30 comprises a unit body 31 disposed to be movable in the axial direction of the cylinder 20, a first piston 32 disposed to permit insertion into and extraction out of the cylinder 20 through the raw material discharge port 26 at the left end of the cylinder 20, and a second piston 33 opposed to the first piston 32.

The unit body 31, consisting of a member so disposed as to surround the front and rear and the right and left of the cylinder 20, and its two ends in the back and forth directions are linked to the unit guides 13 to be movable in the right and left directions. The drive shaft 19 is screwed onto the rear end side of the unit body 31, and a linking portion 31a which can move the unit body 31 in the right and left directions by the turning of the drive shaft 19 is provided to be extensible backward.

The first piston 32 is disposed to be fitted onto the inner face of the cylinder 20, and its outer circumferential face is provided throughout in the circumferential direction with a piston ring 32a to keep the inside of the cylinder 20 airtight. In the central part in the radial direction of the left flank of the first piston 32, a piston shaft 32b is disposed to be extensible leftward, and the tip side of the piston shaft 32b is fixed to the unit body 31. The first piston 32 is drawn out of the cylinder 20 when the unit body 31 is moved to the left end of the frame 10, and inserted into the cylinder 20 by moving the unit body 31 rightward. The right flank of the first piston 32 has a flat and smooth face to prevent raw material grounds A' remaining after the extraction of the beverage from sticking to it.

The second piston 33 is disposed to be fitted onto the inner face of the cylinder 20, and its outer circumferential face is provided throughout in the circumferential direction with a piston ring 33a to keep the inside of the cylinder 20 airtight. In the central part in the radial direction of the right flank of the second piston 33, a piston shaft 33b is disposed to be extensible rightward, and the piston shaft 33b is inserted into a shaft insertion hole 31b formed in the unit body 31. Extending portions 33c and 33d are respectively provided on the tip side and the base end side of the piston shaft 33b, and the second piston 33 can move in the right and left directions relative to the unit body 31 within the range between the extending portions 33c and 33d. Further, a coil-shaped piston urging spring 33e is wound around the piston shaft 33b between the extending portion 33d positioned toward the tip of the piston shaft 33b and the unit body 31 in which the shaft insertion hole 31b is formed to urge the second piston 33 rightward relative to the unit body 31. A coil spring weaker in urging force than the rawmaterial compressing springs 15 is used as the piston urging spring 33e here. Thus, as the tip of the piston shaft 33b is brought into contact with the contact plate 14 urged leftward by the rawmaterial compressing springs 15 when the unit body 31 is moved rightward, the second piston 33 is moved leftward relative to the unit body 31 against the urging force of the piston urging spring 33e. Further, the second piston 33 is enabled to move as far as to the left side end of the cylinder 20 when the unit body 31 is moved leftward, so that raw material grounds A' remaining after the extraction of the beverage can be discharged through the rawmaterial discharge port 26. The left flank of the second piston 33 has a flat and smooth face to prevent raw material grounds A' remaining after the extraction of the beverage from sticking to it.

The beverage extracting action in the beverage extractor 1 configured as described above will now be described. Acaseof extracting regular coffee will be taken up here by way of example. The first and second pistons 32 and 33 are standing by respectively to the left of the raw material input port 21 in the cylinder 20 and to the right of the raw material input port 21 in the cylinder 20.

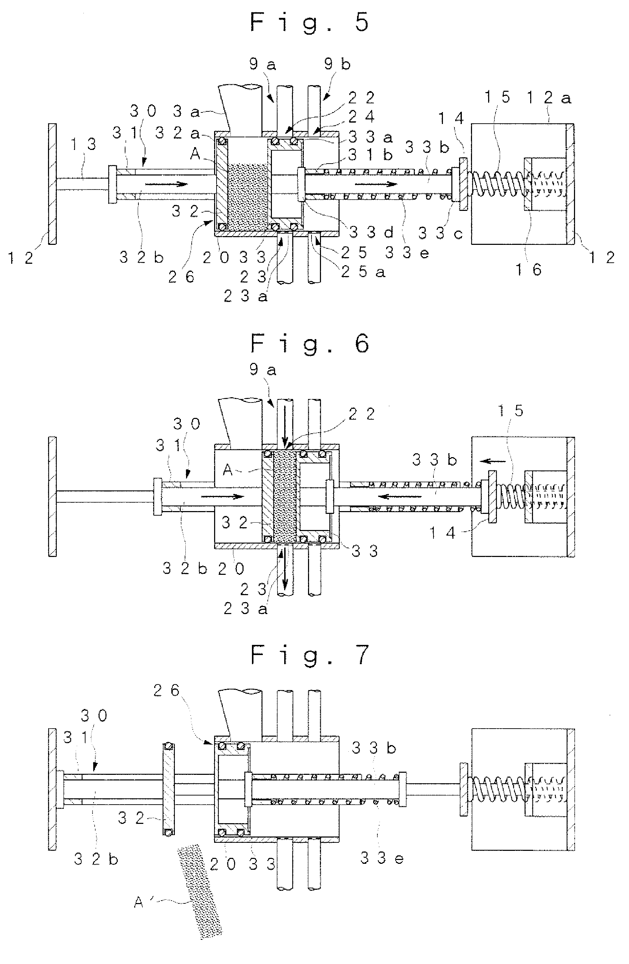

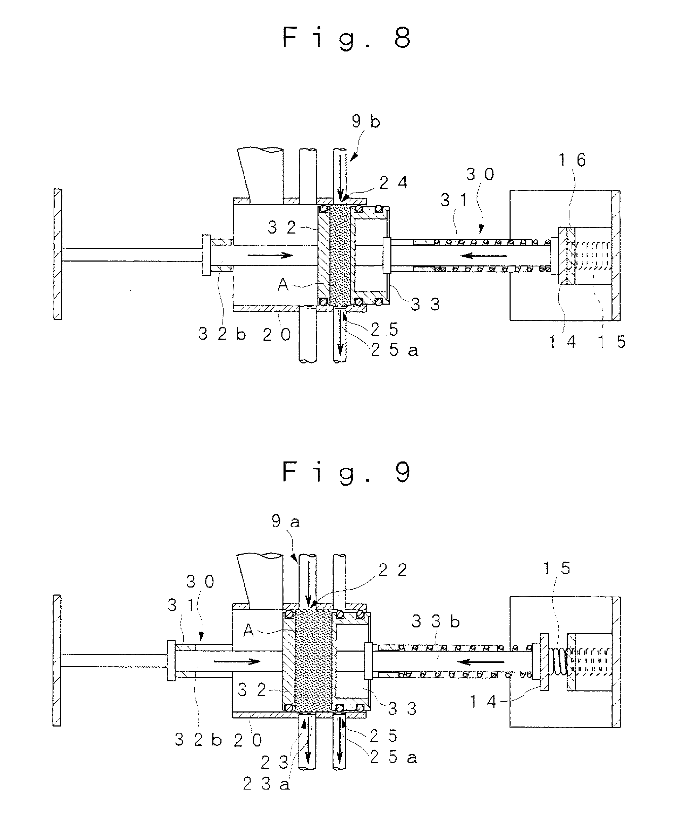

First, with the first and second pistons 32 and 33 in their respective standby positions, as shown in FIG. 5, (9 g here of) raw material A, which is coffee powder resulting from grinding by the mill 3 of beans delivered from the canister 2a, is put into the cylinder 20 through the raw material input port 21, and the drive shaft 19 is driven in one of the circumferential directions. This causes the unit body 31 to move rightward, and the raw material A, pressed by the first piston 32, moves rightward. After moving the unit body 31 until the first piston 32 is positioned to the left of the hot water inlet 22 for regular coffee, the driving of the drive shaft 19 is stopped. Since the tip of the piston shaft 33b of the second piston 33 then comes into contact with the contact plate 14, the second piston 33 is given the urging forces of the raw material compressing springs 15. The second piston 33, as shown in FIG. 6, is thereby moved leftward relative to the unit body 31 against the urging force of the piston urging spring 33e and compresses the raw material A with a prescribed pressure.

After the driving of the drive shaft 19 is stopped, the raw material A is steamed by supplying a small quantity of hot water with the pump 5 via the hot water inlet 22 for regular coffee into the cylinder 20 and, after the lapse of a prescribed length of time, the extraction of beverage is started by pressure-feeding hot water into the cylinder 20 with a prescribed hot water feed pressure (0.1 MPa to 0.8 MPa here). The pressure of the hot water supplied applies a rightward moving force to the second piston 33 then. However, as a leftward moving force is also applied to the second piston 33 by the urging forces of the raw material compressing springs 15, the raw material A is compressed with an appropriate pressure. The extract obtained by feeding hot water to the raw material A, after being filtered by the filter 23a, is poured into a cup from the nozzle 6 via the extract outlet 23 for regular coffee.

After the beverage is extracted, the drive shaft 19 is driven farther in one of the circumferential directions to move the unit body 31 rightward to solidify raw material grounds A' by compression, and the drive shaft 19 is drive in the other of the circumferential directions. This causes the unit body 31 to move leftward to release the raw material grounds A' from compression by the second piston 33, and the raw material grounds A', pressed by the second piston 33, moves leftward. After moving the left flank of the second piston 33 as far as to the rawmaterial discharge port 26 on the left side of the cylinder 20, the drive shaft 19 driving in the other of the circumferential directions is stopped. Then, since the first piston 32 is drawn out of the rawmaterial discharge port 26 on the left side of the cylinder 20 as shown in FIG. 7, the raw material grounds A' drops between the first piston 32 and the second piston 33 to be collected by a rawmaterial grounds collector (not shown).

After discharging the raw material grounds A', the unit body 31 is moved rightward by driving the drive shaft 19 in one of the circumferential directions and, after moving the first piston 32 and the second piston 33 to their respective standby positions, the drive shaft 19 is stopped.

When espresso coffee is to be extracted, (6 g here of) raw material A resulting from grinding by the mill 3 of coffee beans delivered from the canister 2b is put into the cylinder 20 through the raw material input port 21, and the drive shaft 19 is driven in one of the circumferential directions. This causes the unit body 31 to move rightward, and the raw material A, pressed by the first piston 32 , moves rightward. After moving the unit body 31 until the first piston 32 is positioned to the left of the hot water inlet 24 for espresso coffee, the driving of the drive shaft 19 is stopped. Since the tip of the piston shaft 33b of the second piston 33 then comes into contact with the contact plate 14 as shown in FIG. 8, and the movement of the contact plate 14 moving rightward together with the second piston 33 is restricted by its contact with the motion restricting unit 16, the second piston 33 is given the driving force of the motor 18. The second piston 33 is thereby moved leftward relative to the unit body 31 against the urging force of the piston urging spring 33e and compresses the raw material A with a higher pressure than that of compressing the raw material A for regular coffee.

After the driving of the drive shaft 19 is stopped, the rawmaterial A is steamed by supplying a small quantity of hot water with the pump 5 via the hot water inlet 24 for espresso coffee into the cylinder 20, and, after the lapse of a prescribed length of time, the extraction of beverage is started by pressure-feeding hot water into the cylinder 20 with a prescribed hot water feed pressure (0.9 MPa here). The extract filtered by the filter 25a is poured into a cup from the nozzle 6 via the extract outlet 25 for espresso coffee.

After the beverage is extracted, raw material grounds A' are discharged in the same way as in extracting regular coffee, and the first piston 32 and the second piston 33 are stopped in their respective standby positions to end the action to extract the beverage.

When a large quantity of beverage is to be extracted at a time, such as in extracting into a large cup, (16 g here of) raw material A is put in through the raw material input port 21. When the drive shaft 19 is driven in this state, the first piston 32 moves to a position to the left of the hot water inlet 22 for regular coffee and the second piston 33, on account of the large quantity of raw material A put into the cylinder 20, moves to the position of the extract outlet 25 for espresso coffee as shown in FIG. 9. When the extraction of beverage is started by pressure-feeding hot water, an extract comes out of not only the extract outlet 23 for regular coffee but also the extract outlet 25 for espresso coffee. This enables the time taken to extract the beverage to be reducedwhen a large quantity of beverage is to be extracted.

In this way, the beverage extractor in this mode for implementing the invention is provided with the hot water inlets 22 and 24 for feeding hot water to the circumferential face of the cylinder 20 fixed to the frame 10 and the extract outlets 23 and 25 for letting out the extracts obtained in the cylinder 20. As this enables pipes to be connected to the hot water inlets 22 and 24 or the extract outlets 23 and 25 without having to use flexible pipes or provide a complex mechanism for connection of the piping, not only the installation space of the beverage extracting system can be reduced but also its durability can be enhanced. Moreover, as hot water can be circulated in the lengthwise direction of rawmaterial A compressed by the first piston 22 and the second piston 33 in the cylinder 20, it is made possible to sufficiently extract the components of the raw material A by increasing the resistance of the raw material A to the circulation of hot water.

Furthermore, as the cylinder 20 fixed to the frame 10 has the raw material input port 21 in the circumferential face for putting the raw material A in, the chute 3a for guiding the raw material A into the cylinder 20 can be directly connected to the raw material input port 21, and the smear of the surroundings of the raw material input port 21 with raw material A can be prevented.

Further, the first piston 32 and the second piston 33 which can move within the cylinder 20 are arranged, the plurality of pairs of hot water inlet and extract outlet, including one of 22 and 23 and the other of 24 and 25 are disposed in opposed positions on the circumferential face of the cylinder 20 in the axial direction of the cylinder 20, and raw material A is compressed in positions matching the prescribed ones of the paired hot water inlets 22 and 24 and extract outlets 23 and 25 in the cylinder 20 by moving the first piston 32 and the second piston 33 each in its own way. As a result, the desired beverage can be extracted by using the suitable ones of the hot water inlets 22 and 24 and the extract outlets 23 and 25 for the type and extracted quantity of the beverage, and the extraction can be accomplished in a short period of time irrespective of the type and extracted quantity of the beverage.

The cylinder 20 is arranged with its center axis oriented in the horizontal direction, and raw material grounds A' remaining after the extraction of the beverage are discharged by drawing out the first piston 32 through the opening as the raw material discharge port 26 toward one end in the axial direction of the cylinder 20 and the second piston 33 is moved as far as to the raw material discharge port 26 of the cylinder 20. As a result, there is no particular mechanism needed for discharging raw material grounds A', but they can be discharged merely by moving the first piston 32 and the second piston 33, with a corresponding saving in manufacturing cost.

Further, the first and second pistons 32 and 33 are disposed to be moved by the piston unit 30 in which the first piston 32 is fixed to the unit body 31 and the second piston 33 is linked to the unit body 31 to be movable in the axial direction of the cylinder 20, the piston urging spring 33e for urging the second piston 33 in the direction away from the first piston 32, and the raw material compressing mechanism comprising the reversible drive shaft 19 so provided as to screw onto the piston unit 30 and to move the piston unit 30 in the axial direction of the cylinder 20 by turning relative to the piston unit 30, the contact plate 14, the raw material compressing springs 15 and the motion restricting unit 16. Accordingly, the first piston 32 and the second piston 33 can be moved by a single drive power source which reversibly turns the drive shaft 19, resulting in a saving in manufacturing cost.

As the extract outlets 23 and 25 are formed to have opening areas matching the extracted quantities of the respective beverages, it is possible to prevent, by setting the opening areas of the extract outlets 23 and 25 to appropriate sizes matching the extracted quantities of the beverages, such troubles as an extended extraction time when the opening areas of the extract outlets 23 and 25 are too small for the quantity of raw material A or impossibility to bring hot water in uniform contact with raw material A when the opening areas of the extract outlets 23 and 25 are too large for the quantity of rawmaterial A. It is thereby made possible to extract a beverage of high quality in a short period of time irrespective of the type and extracted quantity of the beverage.

Also, within the cylinder 20, since the filters 23a and 25a for filtering the respective extract liquids are provided for the extract outlets 23 and 25 along the circumferential face of the cylinder 20, there is no risk of letting the filters 23a and 25a obstruct the movements of the first piston 32 and the second piston 33, resulting in a further advantage that no raw material grounds A' can remain at the extract outlets 23 and 25.

Further, as filter plates each having a plurality of extracting holes are used as the filters 23a and 25a, one each of filters 23a and 25a can be used for beverage extraction a plurality of times, there is no need to replace the filters every time a beverage is extracted unlike, for instance, paper filters, helping achieve a saving in running cost.

Also, as the filters 23a and 25a are differentiated in opening ratio according to the type of beverage to be extracted, it is possible to prevent, by forming the filters 23a and 25a to have the respectively optimal opening ratios for the hot water feeding pressures at the time of beverage extraction, such troubles as an extended extraction time when the opening ratio is too low relative to the hot water feeding pressure or the resistance to hot water circulation fall to prevent the hot water feeding pressure from rising sufficiently when the opening ratio is too high, enabling a beverage of high quality to be extracted in a short period of time irrespective of the type and extracted quantity of the beverage.

Further, as the extracting holes of the filters 23a and 25a are formed to have the right size or shape to make the throughputs of the raw material grounds A' passing the filters 23a and 25a appropriate quantities, it is possible to control the turbidity of the beverage according to the diameter or shape of each extracting hole. When extracting a less turbid beverage, such as regular coffee for instance, the quality of the beverage can be improved.

Incidentally, though the embodiment described above has the hot water inlet 22 and the extract outlet 23 for regular coffee and the hot water inlet 24 and the extract outlet 25 for espresso coffee separately provided in the cylinder 20 to allow two kinds of beverages to be supplied, hot water inlets and extract outlets differentiated according to the extracted quantity may be provided for a single kind of beverage for instance. In this case, by enlarging the opening sizes of the hot water inlet and the extract outlet, the beverage can be extracted in a short period of time even when a large quantity is to be extracted. Or three or more kinds of hot water inlets and extract outlets can as well be provided to match different quantities to be extracted. In this case, by providing the optimal filter for the kind of beverage at each extract outlet and at the same time a hot water inlet which feeds hot water at the optimal hot water feed pressure, a hot water inlet and an extract outlet each having the optimal opening size for the quantity to be extracted can be formed, making it possible to extract a beverage of higher quality in a shorter period of time.

Further, while the embodiment described above has the hot water inlets 22 and 24 in the upper part of the circumferential face of the cylinder 20 and the extract outlets 23 and 25 in the lower part of the circumferential face, the same effect as this embodiment can be achieved by disposing the hot water inlets in the lower part of the circumferential face the cylinder 20 and the extract outlets in the upper part of the circumferential face.

The preferred embodiment described in this embodiment is only for an illustrative purpose, but in no way limiting. The scope of the invention is presented in the appended claims, and all modifications that can be covered by what the claims mean fall within the scope of the invention.

## Claims

1. A beverage extractor (1) comprising:
a frame (10);
a cylinder (20) fixed to the frame (10);
a compressing member (30) disposed to be movable within the cylinder (20), for compressing a raw material contained in the cylinder (20);
a hot water inlet (22,24) disposed in the circumferential face of the cylinder (20), for feeding hot water into the cylinder (20); and
an extract outlet (23,25) disposed in the circumferential face of the cylinder (20), for letting out extract liquid from the cylinder (20).

2. The beverage extractor (1) according to Claim 1, further comprising:
a raw material input port (21) disposed in the circumferential face of the cylinder (20), for allowing the raw material to be put into the cylinder(20).

3. The beverage extractor (1) according to Claim 2, wherein:
said compressing member (30) includes a first piston (32) and a second piston (33) each capable of moving within the cylinder (20) in the axial direction of the cylinder (20),
the cylinder (20) has in the axial direction thereof a plurality of pairs each of the hot water inlet (22,24) and the extract outlet (23,25), disposed in opposed positions in the circumferential face of the cylinder(20), and comprising:
a piston moving mechanism capable of compressing the raw material within the cylinder(20) in prescribed positions matching the pairs each of the hot water inlet (22,24) and the extract outlet (23,25) by moving the first piston (32) and the second piston (33).

4. The beverage extractor (1) according to claim 3, wherein:
said cylinder (20) is arranged with the center axis thereof oriented in the horizontal direction and the end of the cylinder (20) in the direction of the center axis thereof has an opening (26) through which the first piston (32) can be inserted or drawn out, and
the piston moving mechanism is intended to discharge raw material grounds remaining after the extraction of beverage by drawing the first piston (32) out of the cylinder (20) and moving the second piston (32) to the opening (26).

5. The beverage extractor (1) according to Claim 3, wherein:
said piston moving mechanism includes a unit body (31) to which the first piston (32) is fixed and the second piston (33) is linked to be movable in the direction of the center axis of the cylinder (20), a piston urging member (33e) which urges the second piston (33) in a direction away from the first piston (32), a drive shaft (19) which supports the unit body (31) and moves the unit body (31) in the direction of the center axis of the cylinder (20) by turning the unit body (31), and a raw material compressing mechanism which causes the second piston (33) toward the first piston (32) relative to the unit body (31) by the movement of the unit body (31) toward the second piston (33).

6. The beverage extractor (1) according to Claim 4, wherein:
said piston moving mechanism includes a unit body (31) to which the first piston (32) is fixed and the second piston (33) is linked to be movable in the direction of the center axis of the cylinder (20), a piston urging member (33e) which urges the second piston (33) in a direction away from the first piston (32), a drive shaft (19) which supports the unit body (31) and moves the unit body (31) in the direction of the center axis of the cylinder (20) by turning the unit body (31), and a raw material compressing mechanism which causes the second piston (33) toward the first piston (32) relative to the unit body (31) by the movement of the unit body (31) toward the second piston (33).

7. The beverage extractor (1) according to Claim 3, wherein:
each extract outlet (23,25) has an opening area matching the extracted quantity of beverage.

8. The beverage extractor (1) according to Claim 3, further comprising:
a filter (23a,25a) disposed on the side of said extract outlet (23,25) toward the inner circumferential face of the cylinder (20) and along the inner circumferential face of the cylinder (20), for filtering the extract liquid.

9. The beverage extractor (1) according to Claim 8, wherein:
said filter (23a,25a) is a filter plate having a plurality of extracting holes.

10. The beverage extractor (1) according to Claim 9, wherein:
said filter plate (23a,25a) has an opening ratio appropriate for the type of beverage to be extracted.

11. The beverage extractor (1) according to Claim 9, wherein:
each extracting hole of said filter plate (23a,25a) has a size or shape to make the throughput of raw material grounds passing the extracting hole appropriate for the type of beverage to be extracted.
